# EUROPEAN PATENT SPECIFICATION

(11) **EP 2 671 732 B1**
(45) Date of publication and mention of the grant of the patent: **04.04.2018**
(21) Application number: 12742004.0
(22) Date of filing: 02.02.2012
(51) Int. Cl.: B60C 13/04, B29C 65/36, B29D 30/08, B60C 1/00, B60C 5/01, B60C 13/00, B60C 11/00, B60C 15/024, B60C 5/00, B29D 30/72, B29C 65/14, B29C 65/10, B29L 30/00, B29C 65/00, B29L 31/00, B29C 65/20

(54) **TIRE AND TIRE MANUFACTURING METHOD**
REIFEN UND VERFAHREN ZUR HERSTELLUNG EINES REIFENS
PNEU ET MÉTHODE DE FABRICATION DE PNEU

(30) Priority: 02.02.2011 JP 2011020818
(43) Date of publication of application: 11.12.2013
(73) Proprietor: Bridgestone Corporation, Tokyo 104-8340 (JP)
(72) Inventor: KOUNO, Yoshihide, Tokyo 104-8340 (JP); KON, Seiji, Tokyo 104-8340 (JP); HASEGAWA, Keiichi, Tokyo 104-8340 (JP)
(74) Representative: Oxley, Robin John George
(86) International application number: PCT/JP2012/052409
(87) International publication number: WO 2012/105653

(56) References cited:
- EP-A1- 2 868 490
- WO-A1-2007/071272
- WO-A1-2008/105167
- WO-A1-2010/095655
- JP-A- 6 155 580
- JP-A- 2000 158 906
- JP-A- 2000 158 906
- JP-A- 2000 185 528
- JP-A- 2005 199 667
- JP-A- 2009 520 616
- US-A- 5 047 110
- US-A1- 2008 216 932

## Description

### Technical Field

The present invention relates to a tire manufacturing method. In particular, the present invention relates to a tire manufacturing method wherein at least a portion is formed from a thermoplastic material.

### Background Art

Known pneumatic tires employed in vehicles such as passenger vehicles are configured for example from rubber, organic fiber materials, and steel members.
However used rubber has limited applications in recycling, with rubber being disposed of for example by incineration with thermal recycling, or by shredding for use as a road surfacing material.

Recently the use of for example thermoplastic resins and thermoplastic elastomers as tire materials is being demanded from the perspectives of weight reduction and ease of recycling.
For example, Patent Document 1 discloses a pneumatic tire molded from a thermoplastic polymer material.
Tires employing thermoplastic polymer materials are easier to manufacture and cost less than conventional tires made from rubber.
Patent Document 1: Japanese Patent Application Laid-Open (JP-A) No. H03-143701 Reference is also made to WO 2007/071272 which discloses a tire having a colored surface, and US 5047110 which discloses an apparatus and technique for applying markings or decorations to the sidewall of a cured tire. In addition, EP 2868490 discloses a tire having a circular tire frame formed of at least a thermoplastic resin material and JP 2000-158906 discloses a pneumatic tire with clear color.

### DISCLOSURE OF INVENTION

### Technical Problem

In conventional pneumatic tires made from rubber, rubber on the sides is nearly always black rubber containing carbon black.
Various proposals have been made for methods of applying designs or colored patterns to such rubber pneumatic tires.
One such method involves layering colored rubbers when molding a tire in order to color a black rubber pneumatic tire, however this involves complex processes and makes manufacture more difficult. In such a method, the color is moreover determined at the time of manufacture, thereby making it difficult to provide a wide variety of choices.

Insertion of for example a sheet during tire molding and vulcanization in the mold may be considered, however this entails issues such as tilting of the sheet during vulcanization molding, and rubber injection being made more difficult due to the presence of the sheet affecting the flow of the rubber.
Affixing a sticker to the tire with an adhesive or similar after vulcanization may also be considered, however there are issues with such stickers peeling off as a result of bending accompanying rolling of the tire.

There are accordingly various methods for coloring side portions in rubber pneumatic tires, however each has its own drawbacks.
In pneumatic tires configured from thermoplastic materials, it is not possible to employ the coloring methods for rubber pneumatic tires since the materials configuring such tires are completely different. Issues with peeling away of sheets that are stuck on with adhesive, namely issues with the color coming off, also remain unresolved.

In order to address the above issues, an object of the present invention is to provide a tire configured from thermoplastic material that can be manufactured simply and in which colors do not come off during running, and a tire manufacturing method.

### Solution to Problem

A tire wherein at least a portion is formed from a thermoplastic material containing a colorant is described.

Explanation follows regarding operation of the tire.
Thermoplastic materials on their own are usually transparent or semi-transparent materials, however in the tire described herein, the thermoplastic material is colored using a colorant.
In the tire, the color does not come off during running since the thermoplastic material is colored by the colorant.
A colored tire can moreover be manufactured simply since the colored thermoplastic material can be configured by just mixing the colorant into the thermoplastic material.

A tire manufacturing method includes: a coloring process of adding colorant to a thermoplastic material; and a forming process of forming at least a portion of a tire by employing the thermoplastic material containing the colorant.

Explanation follows regarding operation of the tire manufacturing method.
Firstly, the colorant is added to the thermoplastic material in the coloring process.
In the forming process, at least a portion of the tire is formed employing the thermoplastic material containing the colorant.
The colored tire of which at least a portion is formed from the colored thermoplastic material portion can accordingly be manufactured efficiently.

A tire as further described herein includes: a tire main body of which at least a portion is formed from a first thermoplastic material; and a colored member formed from a second thermoplastic material containing a colorant that is thermally welded to a surface of the tire main body at a portion of the tire main body formed from the first thermoplastic material.

Explanation follows regarding operation of the tire.
In the tire, the colored member formed from the colorant-containing second thermoplastic material is joined firmly to the surface of the portion of the tire main body formed from the first thermoplastic material by thermal welding. Even with repeated deformation due to running, there is accordingly no concern of the colored member peeling away from the tire main body or the color coming off during running, as can be seen in tires of conventional technology in which a sheet shaped colored member is adhered to the tire main body with an adhesive.
A colored tire can be manufactured efficiently due to thermally welding the colored member to the tire main body.

A tire manufacturing method of a first aspect includes: a melting process of applying heat to at least one out of a surface of a tire main body of which at least a portion is formed from a first thermoplastic material at a portion of the tire main body that is formed from the first thermoplastic material, and/or a colored member formed from a second thermoplastic material containing a colorant, and softening or melting at least one of the surface of the tire main body and/or the surface of the colored member; and a welding process of contacting together the tire main body and the colored member and welding together the tire main body and the colored member.

Explanation follows regarding operation of the tire manufacturing method according to the first aspect.
Firstly, in the melting process, heat is applied to at least one out of the surface of the tire main body of which at least a portion is formed from the first thermoplastic material at a portion of the tire main body that is formed from the first thermoplastic material, and/or the colored member formed from the second thermoplastic material containing the colorant, and softening or melting at least one of the surface of the portion of the tire main body formed from the first thermoplastic material and/or the surface of the colored member.
In the welding process, the tire main body and the colored member are contacted together and the tire main body and the colored member are welded together.
A colored tire can be manufactured simply. Note that tires can be easily manufactured in various colors by preparing the colored members in plural different colors.

In the tire manufactured in this way, there is moreover no concern of the colored member peeling away from the tire main body even with repeated deformation of the tire during running, since the colored member formed from the colorant-containing second thermoplastic material is thermally welded to the surface of the portion of the tire main body that is formed from the first thermoplastic material.

A tire manufacturing method of a second aspect is the tire manufacturing method of the first aspect, wherein: the colored member is configured in a sheet shape and is temporarily affixed to a base sheet that has higher heat resistance than the second thermoplastic material; and in the welding process the colored member is placed in contact with the tire main body and the tire main body and the colored member are welded together by pressing the base sheet towards the tire main body.

Next, explanation follows regarding operation of the tire manufacturing method according to the second aspect.
In the welding process, the colored member is placed in contact with the tire main body and the tire main body and the colored member are welded together by pressing the base sheet towards the tire main body. Note that the base sheet is peeled off and removed once the tire main body and the colored member have been welded together.
The sheet shaped colored member is soft and deforms readily, however can be handled easily due to being temporarily affixed to the base sheet.

A tire is also described herein, wherein the first thermoplastic material and the second thermoplastic material are the same type of thermoplastic material as each other.

Explanation follows regarding operation of the tire.
The joint (weld) strength between the tire main body and the colored member is higher than in cases in which different types of thermoplastic material are welded together due to the first thermoplastic material and the second thermoplastic material being the same type of thermoplastic material as each other.

A tire manufacturing method of a third aspect is the tire manufacturing method of either the first aspect or the second aspect, wherein the first thermoplastic material and the second thermoplastic material are the same type of thermoplastic material as each other.

Explanation follows regarding operation of the tire manufacturing method according to the third aspect.
The joint (weld) strength between the tire main body and the colored member can be raised in comparison to cases in which different types of thermoplastic material are welded together due to the first thermoplastic material and the second thermoplastic material being the same type of thermoplastic material as each other.

A tire manufacturing method of a fourth aspect is the tire manufacturing method of any one of the first aspect, the second aspect, or the third aspect, wherein in the melting process, at least one of the tire main body and/or the colored member is heated by a heated heating member.

Explanation follows regarding operation of the tire manufacturing method according to the fourth aspect.
In the melting process, at least one of the tire main body and/or the colored member is heated by the heated heating member, softening or melting the surface of the at least one out of the tire main body and/or the colored member.
The at least one out of the tire main body and/or the colored member can be heated by any simple device as long as heat can be applied such as by an electric heater.

A tire manufacturing method of a fifth aspect is the tire manufacturing method of the fourth aspect, wherein the heating member includes an outer surface that follows the profile of an outer surface of a welding position for the colored member.

Explanation follows regarding operation of the tire manufacturing method according to the fifth aspect.
Since a tire side portion is curved, when for example a flat heating member is brought towards the tire side portion, the separation between the heating member and the tire side portion is not uniform, and the amount of heat imparted would vary between portions nearer to the heating member and portions further away from the heating member, such that uniform heating of the welding position could not be achieved.
Configuring the outer surface of the heating member in a shape that follows the profile of the outer surface of the welding position for the colored member enables the separation between the welding member and the welding position to be kept uniform when bringing the heating member towards the welding position, thereby enabling uniform heating of the welding position, and enabling the welding position to be softened or melted in a uniform manner.

A tire is further described which includes: a tire main body of which at least a portion is formed from a thermoplastic material; and a colored member that is formed from a material containing a colorant, and that is thermally welded to a surface of the tire main body.

Explanation follows regarding operation of the tire.
In the tire, the colored member formed from the colorant containing material is firmly joined to the surface of a portion of the tire main body that is formed from the thermoplastic material by thermal welding. Even with repeated deformation during running, there is therefore no concern of the colored member peeling away from the tire main body or of the color coming off during running, as is seen in tires of conventional technology in which a sheet shaped colored member is adhered to the tire main body with an adhesive.
A colored tire can be manufactured efficiently due to thermally welding the colored member to the tire main body.

A tire manufacturing method is also described which includes: a melting process of applying heat to a surface of a tire main body of which at least a portion is formed from a thermoplastic material, applying the heat at a portion formed from the thermoplastic material and softening or melting the surface; and a welding process of contacting together the tire main body and the colored member formed from a material containing a colorant, and welding together the tire main body and the colored member.

Explanation follows regarding operation of the tire manufacturing method.
Firstly, in the melting process, heat is applied to the surface the tire main body of at which at least a portion is formed from the thermoplastic material, the heat being applied at a portion formed from the thermoplastic material, and softening or melting the surface.
In the welding process, the tire main body (the softened or melted thermoplastic material portion) and the colored member are contacted together, and the tire main body and the colored member are welded together.
A colored tire can accordingly be manufactured simply. Note that tires can be easily manufactured in various colors by preparing the colored members in plural different colors.

Moreover, in a tire manufactured in this way, there is no concern of the colored member peeling away from the tire main body even with repeated deformation during tire running, since the colored member formed from the colorant containing material is thermally welded to the surface of the portion of the tire main body formed from the thermoplastic material.

### Advantageous Effects of Invention

By configuring the tire as described above, simple manufacture is achieved, and color does not come off during running.
According to the tire manufacturing method, a colored tire of which at least a portion is formed from a colored thermoplastic material portion can be efficiently obtained.
By configuring the tire as described above, simple manufacture is achieved, and color does not come off during running.
According to the tire manufacturing method of the first aspect, a colored tire can be efficiently manufactured in which color does not come off during running.
According to the tire manufacturing method of the second aspect, a sheet shaped colored member can be handled easily.
By configuring the tire as described above, higher joint strength between the tire main body and the colored member can be achieved than when different types of thermoplastic material are welded together.
According to the tire manufacturing method of the third aspect, a tire can be efficiently manufactured with high joint strength between the tire main body and the colored member.
According to the tire manufacturing method of the fourth aspect, the tire main body and the colored member can be efficiently welded together using a simple device.
According to the tire manufacturing method of the fifth aspect, the welding position can be uniformly heated, and the welding position can be uniformly softened or melted.
By configuring the tire as described above, simple manufacture is achieved, and color does not come off during running.
According to the tire manufacturing method as further described, a colored tire can be efficiently manufactured in which color does not come off during running.

### BRIEF DESCRIPTION OF DRAWINGS

Fig. 1A is a perspective view illustrating a cross-section of a portion of a tire according to an exemplary embodiment.
Fig. 1B is a cross-section of a bead portion that is fitted to a rim.
Fig. 2 is a perspective view illustrating a cross-section of a portion of a tire according to a second exemplary embodiment.
Fig. 3 is a plan view illustrating examples of colored sheets temporarily affixed to a base sheet.

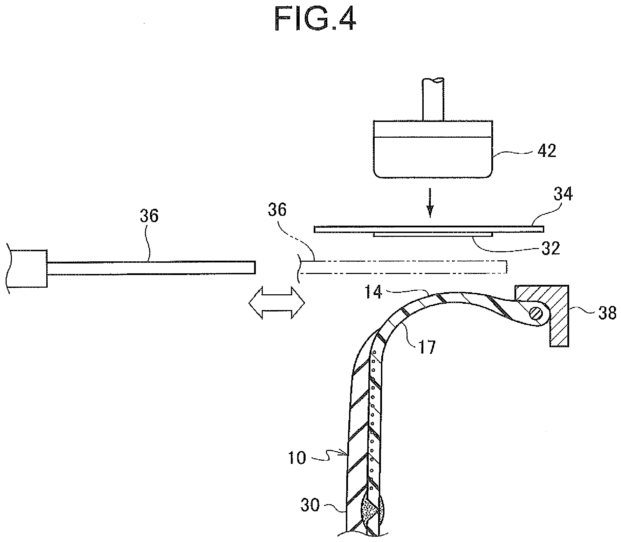

Fig. 4 is an explanatory drawing illustrating a welding process.
Fig. 5 is a side view of a tire (prior to welding colored sheets) according to the second exemplary embodiment.
Fig. 6 is a side view of a heating member according to another exemplary embodiment.

### BEST MODE FOR CARRYING OUT THE INVENTION

### First Exemplary Embodiment

Explanation follows regarding a first exemplary embodiment of a tire, with reference to the drawings.

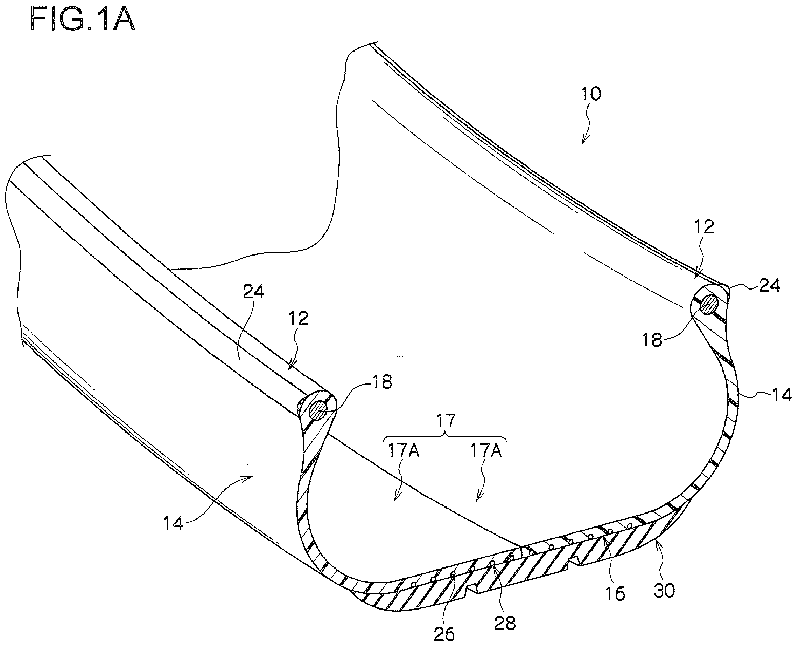

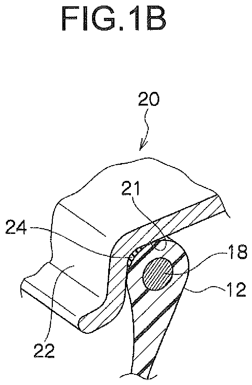

As illustrated in Fig. 1A and Fig. 1B, a tire 10 of the present exemplary embodiment has a similar cross-section profile to that of a conventional general pneumatic vehicle tire that is made from rubber.

The tire 10 is provided with a tire case (tire frame member) 17 including a pair of bead portions 12 that contact bead seats 21 and rim flanges 22 of rims 20, side portions 14 that extend from the bead portions 12 towards the tire radial direction outside, and a crown portion 16 that connects together a tire radial direction outside edge of one of the side portions 14 and a tire radial direction outside edge of the other of the side portions 14.

The tire case 17 of the present exemplary embodiment is formed from a first thermoplastic material.
The tire case 17 of the present exemplary embodiment is formed by joining together tire half bodies 17A serving as tire configuration members that are aligned facing each other at a tire equatorial plane portion. The tire half bodies 17A are integrally molded with one bead portion 12, one side portion 14 and a half-width crown portion 16 in for example a mold, and are configured in circular ring shapes of similar profile to each other. An air chamber is formed between the rims. Note that there is no limitation to forming the tire case 17 by joining together 2 members, and the tire case 17 may for example be formed by joining together 3 or more members such as a first member with one bead portion 12 and side portion 14 integrated together, a second member corresponding to a tread portion (tire outer peripheral portion), and a third member with the other bead portion 12 and side portion 14 integrated together. The tire case 17 may also be integrally molded with the pair of bead portions 12, the pair of side portions 14, and the crown portion 16.
The tire case 17 may also be reinforced with reinforcement material by embedding the reinforcement material (such as a polymer material or metal fiber, cord, nonwoven fabric, or woven fabric) in the tire case 17 (for example in such components as the bead portions 12, the side portions 14, and the crown portion 16).

Examples of materials that may be employed as the first thermoplastic material include thermoplastic resins or thermoplastic elastomers (TPE), with a thermoplastic elastomer preferably employed in consideration of factors such as the resilience required during running and moldability during manufacture.

Examples of thermoplastic elastomers include: amide based thermoplastic elastomers (TPA); ester based thermoplastic elastomers (TPC); olefin based thermoplastic elastomers (TPO); styrene based thermoplastic elastomers (TPS); urethane based thermoplastic elastomers (TPU); thermoplastic vulcanizates (TPV); and other thermoplastic elastomers (TPZ), as defined in JIS K6418.
Examples of thermoplastic resins include: urethane resins; olefin resins; vinyl chloride resins; and polyamide resins.

As such thermoplastic materials, a material may for example be employed that has a heat deflection temperature (when applied with a load of 0.45MPa) of 78°C or above as defined in ISO 75-2 or ASTM D648, a tensile yield strength of 10MPa or greater as defined in JIS K7113, a tensile yield elongation of 10% or greater as similarly defined in JIS K7113, a tensile elongation at break (JIS K7113) of 50% or greater as similarly defined in JIS K7113, and a Vicat softening temperature (method A) of 130°C or above as defined in JIS K7206.

The tire half bodies 17A configured from the first thermoplastic material may be molded by for example a molding process such as vacuum molding, pressure molding, injection molding, or melt casting. The manufacturing process can be greatly simplified compared to that for molding rubber (vulcanization), enabling molding times to be reduced. Moreover, in the present exemplary embodiment, since the tire half bodies 17A are left-right symmetrical, namely since one tire half body 17A and the other tire half body 17A are configured with the same shape, there is the advantage that a single type of mold can be used for molding the tire half bodies 17A.

Circular ring shaped bead cores 18 configured from steel cord similar to that of a conventional general pneumatic tire are embedded in the bead portions 12 of the present exemplary embodiment, however the bead cores 18 may be omitted as long as the rigidity of the bead portions 12 can be secured and there are no issues with fitting together with the rims 20. Note that the bead cores 18 may be formed from cords or materials other than steel, such as from organic fiber cords.

In the present exemplary embodiment, a circular ring shaped seal layer 24 configured from a rubber with superior sealing properties to the first thermoplastic material is formed to contact portions between the bead portions 12 and the rims 20 at least at portions where the bead portions 12 contact the rim flanges 22 of the rims 20. The seal layer 24 may also be formed to portions that contact the bead seat. The rubber employed for forming the seal layer 24 is preferably a similar type of rubber to the rubber employed in bead portion outer faces in conventional general rubber pneumatic tires. The rubber seal layer 24 may be omitted as long as sealing properties to the rims 20 can be secured with thermoplastic material alone, and another type of thermoplastict material may also be employed with superior sealing properties to the first thermoplastic material forming the side portions 14.

A crown portion reinforcement layer 28 configured from a steel reinforcement cord 26 wound in a spiral pattern is embedded in the crown portion 16. Note that the entire reinforcement cord 26 may be embedded in the crown portion 16, or a portion of the reinforcement cord 26 may be embedded in the crown portion 16. The crown portion reinforcement layer 28 corresponds to a belt disposed to an outer peripheral face of a carcass of a conventional rubber pneumatic tire.

A tread rubber layer 30 configured from a rubber with superior abrasion resistance properties to the first thermoplastic material forming the side portions 14 is disposed to the peripheral outside of the crown portion reinforcement layer 28. The rubber employed in the tread rubber layer 30 is preferably a similar type of rubber to the rubber used in a conventional rubber pneumatic tire. Note that a tread layer configured from another type of thermoplastic material with superior abrasion resistance properties to the first thermoplastic material forming the side portions 14 may also be provided at this outer peripheral portion. The tread rubber layer 30 of the present exemplary embodiment employs black colored rubber as employed in a general rubber pneumatic tire, however rubber of a color other than black may also be employed.

In the tire 10 of the present exemplary embodiment, the first thermoplastic material forming the tire case 17 is colored with a colorant. Known colorants employed with thermoplastic materials may be employed as the colorant, and the colored first thermoplastic material can be obtained by mixing the colorant with the (uncolored) raw materials of the first thermoplastic material. A generally known method may be employed for the process for mixing the colorant into the first thermoplastic material (the coloring process of the present invention).
Specific examples of red colorants, yellow colorants, blue colorants, green colorants and white colorants include urethane based toners and colorants for elastomers. A specific example of a black colorant includes carbon black.
Note that the first thermoplastic material may obviously be colored using colorants of other colors, and plural colorants may obviously be mixed together.
Specific examples of the above, such as for example fluorescent materials (that light up on illumination with for example ultraviolet), and luminescent materials (that are illuminated with light and then emit light after light illumination has stopped) are also included in the colorants of the present invention.

### Operation

Explanation follows regarding operation of the tire 10 of the present exemplary embodiment.

In the tire 10 of the present exemplary embodiment, since the tire case 17 is formed from the first thermoplastic material that has been colored by the colorant, color does not come off due to running. Moreover, a colored tire can be simply manufactured just by mixing the colorant into the first thermoplastic material.

The tire 10 has excellent design characteristics due to the tire case 17 formed from the first thermoplastic material being colored.

Note that in the present exemplary embodiment, due to forming the tire case 17 by joining the 2 tire half bodies 17A, the colors may be varied between one tire half body 17A and the other tire half body 17A.
As well as colorant, various fine particles (for example metal powder) that are generally mixed into synthetic resins may be mixed into the first thermoplastic material. Mixing metal powder or the like into the first thermoplastic material enables a pearlescent finish or metallic finish to be achieved for the first thermoplastic material.

Varying the types of fluorescent materials that are mixed into the first thermoplastic material enable light of various colors to be emitted on illumination with ultraviolet and also enables a more eye-catching appearance.
Mixing fine particles such as a metal powder into the first thermoplastic material enables a pearlescent finish or metallic finish appearance to be obtained.
Moreover, obviously one or more out of a fluorescent material, a luminescent material and fine particles may be mixed into the first thermoplastic material in addition to the colorant.

### Second Exemplary Embodiment

Explanation follows regarding a second exemplary embodiment of a tire of the present invention. Note that similar configurations to the first exemplary embodiment are allocated the same reference numerals, and explanation thereof is omitted.

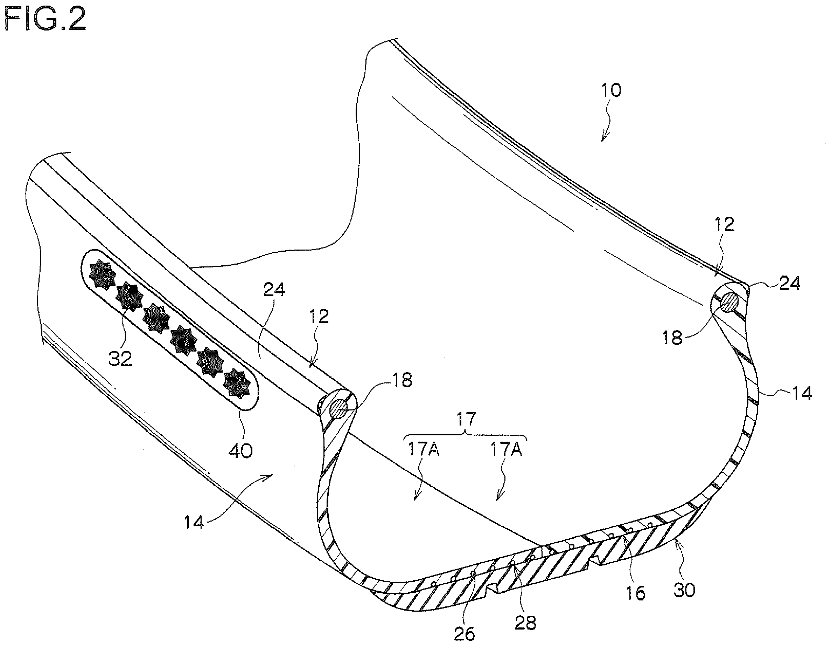

As illustrated in Fig. 2, in a tire 10 of the present exemplary embodiment, a colored sheet 32 that has been colored is welded to a side face of the tire case 17. Note that a tire main body of the present invention refers to the tire 10 to which the colored sheet 32 has not been welded.

The colored sheet 32 is formed from a second thermoplastic material that has been colored with a colorant.
The second thermoplastic material employed for the colored sheet 32 may employ a similar colorant to the colorant employed with the first thermoplastic material employed in the tire case 17. Note that the second thermoplastic material employed in the colored sheet 32 is preferably a similar type of thermoplastic material to the first thermoplastic material employed in the tire case 17, however a different type of thermoplastic material may also be employed.

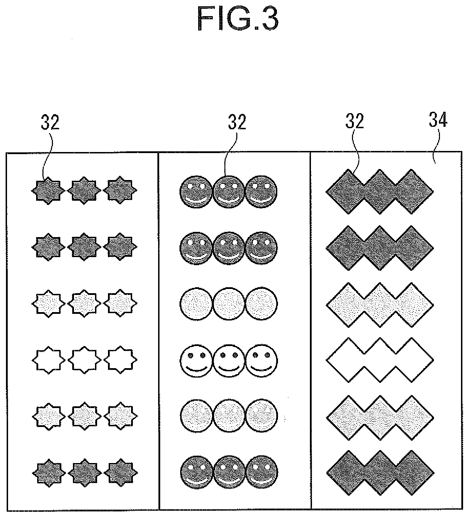

The colorant for the second thermoplastic material of the colored sheet 32 may be a similar type of colorant to the colorant employed for coloring the first thermoplastic material of the tire case 17.
In the present exemplary embodiment, the color of the colored sheet 32 differs from the color of the tire case 17, however the colored sheet 32 and the tire case 17 may be the same color. The shapes of the colored sheet 32 are not limited to those illustrated in Fig. 2 and Fig. 3, and may take other shapes such as letters, logos, pictures, or symbols.

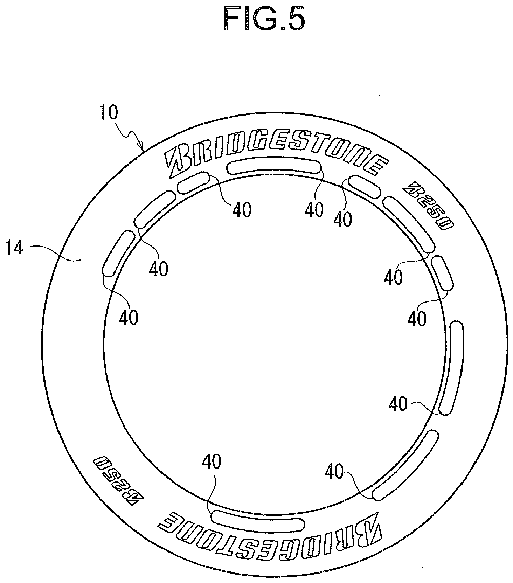

Explanation next follows regarding the welding method of the colored sheet 32 to the tire case 17 of the tire 10.
(1) As illustrated in Fig. 3, the colored sheet 32 is temporarily affixed to a base sheet 34 in advance. An adhesive or the like is coated onto the base sheet 34, with the colored sheet 32 temporarily affixed by this adhesive or the like. The base sheet 34 is a sheet shaped member that has superior heat resistance to the colored sheet 32, and employs for example a paper or a fabric, or a synthetic resin sheet, that does not soften or melt at the melting temperature of the second thermoplastic material of the colored sheet 32.
(2) Heat is applied to soften (to a level allowing welding) or melt at least one out of a colored sheet planned welding location of the tire case 17 or the colored sheet 32 using a flat plate shaped heating member 36 formed for example from a metal plate that is heated for example by an inbuilt electric heater (melting process). The colored sheet 32 and the tire case 17 are then welded together by placing the colored sheet 32 in contact with the tire case 17 facing the planned welding location and pressing the base sheet 34 towards the tire case 17 with a pressing member 42 or by pressing the base sheet 34 towards the tire case 17 whilst rolling with a press roller (not illustrated in the drawings) (welding process). Note that it is sufficient for the heating member 36 to be able to soften or melt the planned welding location, and it does not have to contact the portion being heated.
   Note that for ease of positioning the colored sheet 32, adhesion regions 40 for adhering the colored sheet(s) 32 may be provided to the side portion 14 of the tire 10 as for example illustrated in Fig. 5. The adhesion regions 40 of the present exemplary embodiment are configured with slightly raised frame shapes, however other configurations may also be employed.
   Note that the adhesion regions 40 are preferably provided at portions that do not affect tire labeling (for example legally required labeling formed by undulations in the surface such as the tire size, maker, a symbol indicating rotation direction, and trade name).
   The welding locations of the tire case 17 and the colored sheet 32 are preferably cleaned in advance prior to welding using a solvent such as alcohol. Corona treatment and/or ultraviolet treatment, for example, may be performed on the welding locations for ease of welding. Buffing abrasion may also be performed in advance on the welding locations of the tire case 17.
(3) After welding, natural air cooling or forced air cooling by for example a fan is performed on the welded portions. After the temperature of the welded portions has fallen and the first and second thermoplastic materials have fully hardened, the base sheet 34 is removed from the surface of the tire case. The tire 10 to which the colored sheet 32 is welded is thus completed.

### Operation

In the tire 10 of the present exemplary embodiment, there is no concern of the colored sheet 32 peeling away from the tire case 17 even with repeated deformation of the tire 10 during running, since the colored sheet 32 formed from the colorant-containing second thermoplastic material is welded to the surface of the tire case 17.

Note that the shape of the colored sheet 32 may be configured in a circular ring shape conforming to the size of the tire side portion (bead portion 12, side portion 14) and welded to the tire side portion. So doing enables the color of the tire side portion to be varied simply. Preparing colored sheets 32 in various colors enables the color of the tire 10 to be changed easily, such that there is no need to hold stocks of plural types of the tire 10 in different colors. Stock storage space can accordingly be reduced, with stock management being made simpler.

In the method of the present exemplary embodiment, the colored sheet 32 that has been colored can be simply applied to a tire 10 that has been previously manufactured, thereby enabling above processes (2) to (4) to be performed for example at a retail outlet. Various color changes and the attachment of various logos, lettering and so on to the tire 10 by thermal welding at a retail outlet or the like enables variations or improvements to the external design of the tire 10 to be made simply.
Namely, employing the method of the present exemplary embodiment allows a user to select a colored sheet 32 of their favorite designs from amongst several patterns and colors at a tire retail outlet and have the colored sheet welded at the user's preferred positions.

Note that higher joint strength can be obtained by melting, rather than softening, the welding location of the tire case 17 and the colored sheet 32. Moreover, higher joint strength can be obtained by applying heat to soften or melt both the tire case 17 and the colored sheet 32 rather than only softening or melting one out of the tire case 17 and the colored sheet 32.
It is preferable to raise the joint strength by providing a mixing layer where the first thermoplastic material of the tire case 17 and the second thermoplastic material of the colored sheet 32 mix together between the first thermoplastic material of the tire case 17 and the thermoplastic material of the colored sheet 32 when the melted thermoplastic materials are brought against each other.

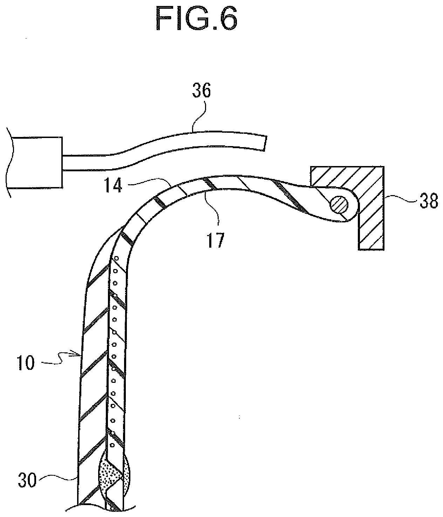

In the above exemplary embodiment, the flat plate shaped heating member 36 is employed to heat the tire case 17, however a heating member 36 curved into a shape following the curve of the side portion 14 as illustrated in Fig. 6 may also be employed. Employing such a heating member 36 enables the separation between the heating member 36 and the side portion 14 to be made uniform, enabling uniform heating of the side portion 14 and uniform softening or melting of the surface.

In the above exemplary embodiment, the tire case 17 and/or the colored sheet 32 is softened or melted employing the heating member 36, however the method of heating the first and second thermoplastic materials is not particularly limited and the tire case 17 and/or the colored sheet 32 may be softened or melted by for example hot air, an infrared lamp, or a laser beam.

In the tire 10 of the above exemplary embodiment, the rubber-formed tread rubber layer 30 is provided to the outer periphery of the tire case 17 that is configured from the first thermoplastic material, however the tread rubber layer 30 may be a tread layer configured from the first thermoplastic material or another type of thermoplastic material. Note that the thermoplastic material of the tread layer may be colored with a colorant similar to that of the tire case 17, and the thermoplastic material-configured tread layer and tire case 17 may be the same color as each other, or may be of different colors to each other.

Note that the tire case 17 of the present exemplary embodiment is formed by joining together the 2 tire half bodies 17A, however the tire case 17 may be configured from 3 or more thermoplastic material members, with each member having a different color, or all members having the same color.
The first thermoplastic material and the second thermoplastic material may be configured from the same type of thermoplastic material, or from different types of thermoplastic material, and the melting point of the first thermoplastic material and the melting point of the second thermoplastic material may be the same or may be different from each other, and it is sufficient to be able to melt either one thereof.
The colored sheet 32 may be configured with a single layer structure configured from a single material, or may be configured with a plural layer structure of different materials. When the colored sheet 32 is configured with a plural layer structure of different materials, a layer on the side of the colored sheet 32 that is welded to the tire case 17 is preferably formed from a thermoplastic material.

In the tire 10 of the above exemplary embodiment, the tire case 17 is formed from the first thermoplastic material and the tread portion is formed from rubber, however the tread portion may be formed from a material other than rubber such as a thermoplastic material, and the overall tire may be formed from thermoplastic material.

In the second exemplary embodiment described above, the tire case 17 is formed from the first thermoplastic material, and the colored sheet 32 is formed from the second thermoplastic material, with both being configured from thermoplastic material, however either one of the tire case 17 or the colored sheet 32 may be formed from a material other than a thermoplastic material (for example a soft thermosetting material (thermosetting resin)) as long as the tire case 17 and the colored sheet 32 can be welded together, and a sufficient joint strength can be obtained such that the tire case 17 and the colored sheet 32 do not come apart from each other during running.
The tire 10 of the above exemplary embodiments is what is known as a pneumatic tire, however the present invention may also be applied to a non-pneumatic tire (solid tire). The present invention is moreover not limited to use with passenger vehicles, and may also be applied to other tires such as for two-wheeled vehicles.

## Claims

1. A tire (10) manufacturing method comprising:
a melting process of applying heat to at least one of: a surface of a tire main body, of which at least a portion is formed from a first thermoplastic material, at the portion of the tire main body that is formed from the first thermoplastic material, or a colored member (32) formed from a second thermoplastic material containing a colorant; and softening or melting at least one of the surface of the tire main body or the surface of the colored member; and
a welding process of contacting the tire main body and the colored member (32) and welding together the tire main body and the colored member (32).

2. The tire (10) manufacturing method of claim 1, wherein:
the colored member (32) is configured in a sheet shape and is temporarily affixed to a base sheet (34) that has higher heat resistance than the second thermoplastic material; and
in the welding process, the colored member is made to contact the tire main body, and the tire main body and the colored member are welded together by pressing the base sheet towards the tire main body.

3. The tire (10) manufacturing method of either claim 1 or claim 2, wherein the first thermoplastic material and the second thermoplastic material are the same type of thermoplastic material.

4. The tire (10) manufacturing method of any one of claim 1, claim 2 or claim 3, wherein, in the melting process, at least one of the tire main body or the colored member (32) is heated by a heated heating member (36).

5. The tire (10) manufacturing method of claim 4, wherein the heating member (36) comprises an outer surface that follows the profile of an outer surface of a welding position for the colored member (32).

## Patentansprüche

1. Herstellungsverfahren für einen Reifen (10), das Folgendes umfasst:
einen Schmelzvorgang des Anwendens von Wärme auf wenigstens eines von Folgendem: eine Oberfläche eines Reifenhauptkörpers, von dem wenigstens ein Abschnitt aus einem ersten thermoplastischen Material geformt ist, an dem Abschnitt des Reifenhauptkörpers, der aus dem ersten thermoplastischen Material geformt ist, oder eines gefärbten Elements (32), das aus einem zweiten thermoplastischen Material geformt ist, das ein Farbmittel enthält, und Erweichen oder Schmelzen wenigstens eines von der Oberfläche des Reifenhauptkörpers oder der Oberfläche des gefärbten Elements und
einen Schweißvorgang des In-Berührung-Bringens des Reifenhauptkörpers und des gefärbten Elements (32), wobei der Reifenhauptkörper und das gefärbte Element (32) zusammengeschweißt werden.

2. Herstellungsverfahren für einen Reifen (10) nach Anspruch 1, wobei:
das gefärbte Element (32) in einer Bahnform konfiguriert ist und zeitweilig an einer Grundbahn (34) befestigt wird, die eine höhere Wärmebeständigkeit hat als das zweite thermoplastische Material, und,
in dem Schweißvorgang, das gefärbte Element dazu gebracht wird, den Reifenhauptkörper zu berühren, und der Reifenhauptkörper und das gefärbte Element durch Pressen der Grundbahn zu dem Reifenhauptkörper hin zusammengeschweißt werden.

3. Herstellungsverfahren für einen Reifen (10) nach Anspruch 1 oder Anspruch 2, wobei das erste thermoplastische Material und das zweite thermoplastische Material die gleiche Art von thermoplastischem Material sind.

4. Herstellungsverfahren für einen Reifen (10) nach Anspruch 1, Anspruch 2 oder Anspruch 3, wobei, in dem Schmelzvorgang, wenigstens eines von dem Reifenhauptkörper und dem gefärbten Element (32) durch ein beheiztes Heizelement (36) erhitzt wird.

5. Herstellungsverfahren für einen Reifen (10) nach Anspruch 4, wobei das Heizelement (36) eine Außenfläche umfasst, die dem Profil einer Außenfläche einer Schweißposition für das gefärbte Element (32) folgt.

## Revendications

1. Procédé de fabrication d'un bandage pneumatique (10), comprenant :
un processus de fusion consistant à appliquer de la chaleur sur au moins un des éléments suivants : une surface d'un corps principal du bandage pneumatique, dont au moins une partie est formée à partir d'un premier matériau thermoplastique, sur une partie du corps principal du bandage pneumatique formée à partir du premier matériau thermoplastique, ou un élément coloré (32) formé à partir d'un deuxième matériau thermoplastique contenant un colorant ; et ramollissement ou fusion d'au moins l'une parmi la surface du corps principal du bandage pneumatique ou la surface de l'élément coloré ; et
un processus de soudage consistant à contacter le corps principal du bandage pneumatique et l'élément coloré (32) et à assembler par soudage le corps principal du bandage pneumatique et l'élément coloré (32).

2. Procédé de fabrication d'un bandage pneumatique (10) selon la revendication 1, dans lequel :
l'élément coloré (32) est configuré en une forme de feuille et est fixé de manière temporaire sur une feuille de base (34) présentant une résistance à la chaleur supérieure à celle du deuxième matériau thermoplastique ; et
au cours du processus de soudage, l'élément coloré est entraîné à contacter le deuxième matériau thermoplastique, le corps principal du bandage pneumatique et l'élément coloré étant assemblés par soudage en pressant la feuille de base vers le corps principal du bandage pneumatique.

3. Procédé de fabrication d'un bandage pneumatique (10) selon les revendications 1 ou 2, dans lequel le premier matériau thermoplastique et le deuxième matériau thermoplastique sont du même type de matériau thermoplastique.

4. Procédé de fabrication d'un bandage pneumatique (10) selon l'une quelconque des revendications 1, 2 ou 3, dans lequel, au cours du processus de fusion, au moins l'un parmi le corps principal du bandage pneumatique et l'élément coloré (32) est chauffé par un élément de chauffage chauffé (36).

5. Procédé de fabrication d'un bandage pneumatique (10) selon la revendication 4, dans lequel l'élément de chauffage (36) comprend une surface externe suivant le profil d'une surface externe d'une position de soudage de l'élément coloré (32).
